# EUROPÄISCHE PATENTANMELDUNG

(11) **EP 4 509 361 A1**
(43) Veröffentlichungstag der Anmeldung: **19.02.2025**
(21) Anmeldenummer: 24194868.6
(22) Anmeldetag: 16.08.2024
(51) Int. Cl.: B60Q 1/00, F21S 41/147, F21S 41/151, F21S 41/33, F21S 41/365, F21S 41/40, F21S 41/663, F21W 102/13, F21W 102/30

(54) **IN ABBLENDLICHT-SCHEINWERFER EINES FAHRZEUGS INTEGRIERTES NEBELLICHT**

(30) Priorität: 17.08.2023 DE 102023121992
(71) Anmelder: Daimler Truck AG, 70771 Leinfelden-Echterdingen (DE)
(72) Erfinder: Korner, Philip, 70771 Leinfelden-Echterdingen (DE)

(57) **Zusammenfassung**

Die Erfindung betrifft einen Scheinwerfer für ein Fahrzeug, aufweisend eine Reflektorfläche (1), und eine erste Gruppe von LED-Elementen (3) und eine zweite Gruppe von LED-Elementen (5), deren jeweilige Abstrahlcharakteristik auf die Reflektorfläche (1) so gerichtet ist, dass die erste Gruppe von LED-Elementen (3) die gesamte Reflektorfläche (1) beleuchtet, um ein Abblendlicht zu erzeugen, und dass die zweite Gruppe von LED-Elementen (5) nur auf einen ersten Teilbereich (7) der Reflektorfläche (1) gerichtet ist, um eine zusätzliche Beleuchtungsfunktion zu erzeugen, wobei jeweilige Strahlenblenden (9) die jeweiligen LED-Elemente so umgeben, dass eine gewünscht definierte Abstrahlcharakteristik auf die Reflektorfläche (1) erreicht wird und unerwünschtes Streulicht absorbiert oder in die gewünschte Abstrahlcharakteristik umgelenkt wird.

## Beschreibung

Die Erfindung betrifft einen Scheinwerfer für ein Fahrzeug, sowie ein Fahrzeug mit einem solchen Scheinwerfer.

Von weiteren Leuchten eines Fahrzeugs abgegrenzte und damit separat angeordnete Nebelscheinwerfer in Fahrzeugen können beispielsweise im unteren Bereich eines Stoßfängers angeordnet werden. Bei modernen Fahrzeugen mit speziellem Design und begrenztem Bauraum kann sich diese Anordnung jedoch als schwierig oder gar unmöglich herausstellen. Die jüngste Entwicklung von LED-Modulen zu leuchtstarken, stromsparenden Beleuchtungsanlagen führt jedoch zu neuen Freiheitsgraden in der Entwicklung und Konfiguration von Scheinwerfern für Fahrzeuge. Die Integration solcher LED-Module in Scheinwerfer für Fahrzeuge ist im Stand der Technik bekannt:
Die DE 103 33 837 A1 betrifft ein Leuchtdioden-Modul für einen Fahrzeugscheinwerfer, wobei das Leuchtdioden-Modul einen Reflektor und einen Träger für Leuchtdioden besitzt und der Träger mindestens einen Oberflächenbereich aufweist, auf dem mehrere Leuchtdioden angeordnet sind, wobei die Leuchtdioden entlang mindestens einer gekrümmten Linie auf dem mindestens einen Oberflächenbereich angeordnet sind.

Die DE 10 2013 220 192 A1 betrifft ferner ein LED-Modul eines Scheinwerfers eines Kraftfahrzeugs zur Erzeugung einer abgeblendeten Lichtverteilung mit einer im Wesentlichen horizontalen Helldunkelgrenze, das LED-Modul umfassend zwei Reflektoren, deren Reflexionsflächen jeweils in mehrere Segmente unterteilt sind, und mindestens zwei LEDs, wobei jedem der Reflektoren mindestens eine LED zugeordnet ist, wobei die Helldunkelgrenze der Lichtverteilung in mehrere nebeneinander liegende Abschnitte unterteilt ist, wobei das LED- Modul derart ausgebildet ist, dass zumindest einigen der LEDs jeweils eines der Reflektorsegmente primär zugeordnet ist und diese LEDs im Zusammenwirken mit dem ihnen primär zugeordneten Reflektorsegment einen Bereich der Lichtverteilung ausleuchten, der einen bestimmten Abschnitt der Helldunkelgrenze erzeugt, und dass die Summe der LEDs mit den ihnen jeweils primär zugeordneten Reflektorsegmenten die gesamte Helldunkelgrenze erzeugt.

Aufgabe der Erfindung ist es, eine Integration eines Lichtmoduls für ein Fahrzeug, welches über ein reguläres Abblendlicht hinausgehende Beleuchtungsfunktionen aufweist, zu verbessern.

Die Erfindung ergibt sich aus den Merkmalen der unabhängigen Ansprüche. Vorteilhafte Weiterbildungen und Ausgestaltungen sind Gegenstand der abhängigen Ansprüche.

Ein erster Aspekt der Erfindung betrifft einen Scheinwerfer für ein Fahrzeug, aufweisend eine Reflektorfläche, und eine erste Gruppe von LED-Elementen und eine zweite Gruppe von LED-Elementen, deren jeweilige Abstrahlcharakteristik auf die Reflektorfläche so gerichtet ist, dass die erste Gruppe von LED-Elementen die gesamte Reflektorfläche beleuchtet, um ein Abblendlicht zu erzeugen, und dass die zweite Gruppe von LED-Elementen nur auf einen ersten Teilbereich der Reflektorfläche gerichtet ist, um eine zusätzliche Beleuchtungsfunktion zu erzeugen, wobei jeweilige Strahlenblenden die jeweiligen LED-Elemente so umgeben, dass eine gewünscht definierte Abstrahlcharakteristik auf die Reflektorfläche erreicht wird und unerwünschtes Streulicht absorbiert oder in die gewünschte Abstrahlcharakteristik umgelenkt wird.

Die LED-Elemente werden bevorzugt als Gruppen von Vielzahlen von LED-Elementen ausgeführt, sodass ein einzelnes LED-Element in der abgegebenen Lichtstärke schwächer ausgeführt werden kann und beim Ausfall eines einzelnen LED-Elements die Funktion des Scheinwerfers kaum beeinträchtigt wird.

Die LED-Elemente beleuchten dabei das Umfeld des Fahrzeugs nie direkt, vielmehr wird immer eine indirekte Einstrahlung dadurch erreicht, dass sämtliche LED-Elemente in ihrer Abstrahlcharakteristik auf die Reflektorfläche gerichtet sind, welche die finale Abstrahlcharakteristik des Scheinwerfers in die Umgebung des Fahrzeugs bestimmt. Diese ist insbesondere für eine asymmetrische Abblendlicht-Verteilung wichtig, um möglichst die vorausliegende Fahrbahn vor dem Fahrzeug beleuchten zu können, jedoch nicht den Gegenverkehr zu blenden. Dagegen kann das erste bzw. können die ersten Teilbereiche der Reflektorfläche so ausgestaltet sein insbesondere in Bezug auf die Lage der LED-Elemente der zweiten Gruppe, dass eine symmetrische Abstrahlcharakteristik der zusätzlichen Beleuchtungsfunktion wie eines Nebellichts erhalten wird.

Die Gruppen von LED-Elementen können insbesondere durch ein Steuergerät des Fahrzeugs separat angesteuert werden, um beispielsweise eine Nebellichtfunktion zu aktivieren. Dadurch kann ein Nebellicht effektiv realisiert werden, ohne die Funktionalität des Abblendlichts zu beeinträchtigen.

Vorteilhaft wird ein Hauptscheinwerfer für ein Fahrzeug mit geringer konstruktiver Komplexität erreicht. Die Ansteuerung der ersten Gruppe von LED-Elementen und der zweiten Gruppe von LED-Elementen kann durch eine Steuereinheit des Fahrzeugs erfolgen und somit wahlweise ein Abblendlicht oder die zusätzliche Beleuchtungsfunktion aktiviert werden. Auch ist nicht ausgeschlossen, dass sowohl das Abblendlicht als auch die zusätzliche Beleuchtungsfunktion aktiviert werden, um beispielsweise bei Nebel mithilfe der zusätzlichen Beleuchtungsfunktion eine Nebelleucht-Funktion erwirken zu können.

Vorteilhaft können somit zusätzliche Lichtquellen und Strahlenblenden unter Nutzung eines Teilbereichs der Abblendlicht-Reflektor-Fläche für eine Nebellichtverteilung integriert werden.

Es ist eine vorteilhafte Wirkung der Erfindung, dass eine Verringerung des Bauraum-Bedarfs für eine Beleuchtungsfunktion, die über die reguläre Abblendlichtfunktion eines Scheinwerfers hinausgeht, erreicht werden kann. Ist die zusätzliche Beleuchtungsfunktion die Ausgabe von Nebelscheinwerferlicht, kann auf separate Nebelscheinwerfer, welche vom Scheinwerfer für Abblendlicht baulich getrennt am Fahrzeug angeordnet werden, verzichtet werden. Der Montageaufwand bei der Herstellung des Fahrzeugs verringert sich somit, Nebelscheinwerfer müssen nicht montiert werden, ein entsprechender elektrischer Kontakt entfällt, und eine Einstellung des Nebelscheinwerfers an sich ist ebenfalls nicht nötig. Die spart zudem Masse und damit Gewicht sowie Kosten.

Gemäß einer vorteilhaften Ausführungsform sind alle LED-Elemente der ersten Gruppe und der zweiten Gruppe auf einem gemeinsamen Paneel angeordnet.

Gemäß einer weiteren vorteilhaften Ausführungsform ist das Paneel innerhalb eines Gehäuses des Scheinwerfers angeordnet.

Gemäß einer weiteren vorteilhaften Ausführungsform ist die zusätzliche Beleuchtungsfunktion die Funktion einer Nebelleuchte. Indem durch die zweite Gruppe der LED-Elemente die Funktion eines Nebelscheinwerfers ausgebildet werden kann, ist es nicht weiter notwendig, einen separaten Nebelscheinwerfer an der Front des Fahrzeugs zu verbauen. Somit wird vorteilhaft Bauraum und zusätzlicher Aufwand bei der Montage des Fahrzeugs einschließlich einer elektrischen Verkabelung eingespart. Die Funktion des Nebelscheinwerfers kann durch eine Steuereinheit dabei optional der des Abblendlichts in ein und demselben Scheinwerfer überlagert ausgeführt werden. Das Abblendlicht wird dabei nicht beeinträchtigt.

Gemäß einer weiteren vorteilhaften Ausführungsform ist die zusätzliche Beleuchtungsfunktion die Funktion eines Fernlichts.

Gemäß einer weiteren vorteilhaften Ausführungsform weist der Scheinwerfer weiterhin eine dritte Gruppe von LED-Elementen auf, deren LED-Elemente so ausgerichtet und konfiguriert sind, dass ihre Abstrahlcharakteristik auf die Reflektorfläche gerichtet ist, um ein Nebellicht oder Fernlicht zu erzeugen.

Gemäß einer weiteren vorteilhaften Ausführungsform ist die Abstrahlcharakteristik der dritten Gruppe von LED-Elementen nur auf einen zweiten, vom ersten abweichenden, Teilbereich der Reflektorfläche gerichtet.

Gemäß einer weiteren vorteilhaften Ausführungsform weist der Scheinwerfer zwei Reflektorflächen, und in jedem der Reflektorflächen einen jeweiligen ersten Teilbereich auf.

Gemäß einer weiteren vorteilhaften Ausführungsform weisen die zwei Reflektorflächen unterschiedliche Abstrahlcharakteristiken in die Umgebung des Fahrzeugs auf.

Ein weiterer Aspekt der Erfindung betrifft ein Fahrzeug mit einem Scheinwerfer wie oben und im Folgenden beschrieben.

Vorteile und bevorzugte Weiterbildungen des vorgeschlagenen Fahrzeugs ergeben sich durch eine analoge und sinngemäße Übertragung der im Zusammenhang mit dem vorgeschlagenen Scheinwerfer vorstehend gemachten Ausführungen.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigen:
- Fig. 1:: Einen Scheinwerfer von vorne gemäß einem Ausführungsbeispiel der Erfindung.
- Fig. 2:: Eine Anordnung einer ersten und zweiten Gruppe von LED-Elementen gemäß einem Ausführungsbeispiel der Erfindung.

Die Darstellungen in den Figuren sind schematisch und nicht maßstäblich.

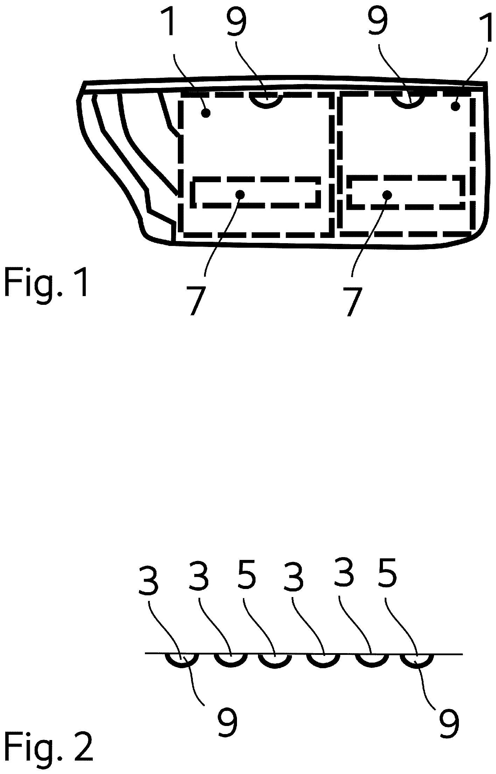

Fig. 1 zeigt einen Scheinwerfer für ein Fahrzeug aus einer Frontansicht. In einem Gehäuse des Scheinwerfers sind zwei Reflektorflächen 1 angeordnet, die jeweils wiederum zwei Teilbereiche 7 aufweisen. In der Fig. 1 sind sowohl die beiden Reflektorflächen 1 als auch die ersten Teilbereiche 7 davon durch gestrichelte Linien in Rechteckform umgrenzt. Außerdem weist der Scheinwerfer eine erste Gruppe 3 von LED-Elementen und eine zweite Gruppe 5 von LED-Elementen auf, deren jeweilige Abstrahlcharakteristik auf zumindest eine der Reflektorflächen 1 einschließlich der jeweiligen Teilbereiche 7 so gerichtet ist, dass die erste Gruppe 3 von LED-Elementen die gesamten Reflektorflächen 1 einschließlich der Teilbereiche 7 beleuchtet, um ein Abblendlicht zu erzeugen, und dass die zweite Gruppe 5 von LED-Elementen nur auf einen oder beide der ersten Teilbereich 7 der Reflektorfläche 1 gerichtet ist, um eine zusätzliche Beleuchtungsfunktion zu erzeugen. Hierbei kann die zusätzliche Beleuchtungsfunktion als Nebellicht angewendet werden, die bei bereits eingeschaltetem Abblendlicht oder auch ohne das Abblendlicht aktivierbar ist. Strahlenblenden 9 um Bereich derjeweiligen LED-Elemente sorgen dafür, dass eine klar definierte Abstrahlcharakteristik auf die Reflektorfläche 1 (bzw. deren erste Teilbereiche 7) erreicht wird und unerwünschtes Streulicht absorbiert oder in die gewünschte Abstrahlcharakteristik auf die Reflektorfläche 1 (bzw. deren erste Teilbereiche 7) durch Reflexion umgelenkt wird.

Fig. 2 zeigt eine beispielhafte Anordnung von LED-Elementen der ersten Gruppe 3 und der zweiten Gruppe 5 mit einer jeweiligen Strahlenblende 9. Die gezeigte Anordnung ist lediglich beispielhaft zu verstehen, es bestehen abhängig von der Einbauposition des Scheinwerfers am Fahrzeug, abhängig von der gewünschten Lichtstärke und Abstrahlcharakteristik des gesamten Scheinwerfers, von Voraussetzungen der Fahrzeug-Zulassung und vielem weiteren restringierte Freiheitsgrade bezüglich der Konfiguration und Anordnung, Auswahl und Anzahl der LED-Elemente. Im vorliegenden Beispiel sind die LED-Elemente der ersten Gruppe 3 und der zweiten Gruppe 5 gemischt nebeneinander angeordnet, wobei die Anzahl der LED-Elemente der ersten Gruppe 3 dominierend ist. Jedes der LED-Elemente weist eine Strahlenblende 9 auf, wobei der Einfachheit halber in Fig. 2 nur die äußeren der beiden LED-Elemente als eine Strahlenblende 9 aufweisend gekennzeichnet sind.

Obwohl die Erfindung im Detail durch bevorzugte Ausführungsbeispiele näher illustriert und erläutert wurde, ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen, beispielsweise hinsichtlich der Funktion oder der Anordnung einzelner, in einer beispielhaften Ausführungsform genannter Elemente, vornehmen kann, ohne den Schutzbereich zu verlassen, der durch die Ansprüche und deren rechtliche Entsprechungen, wie etwa weitergehende Erläuterungen in der Beschreibung, definiert wird.

### Bezugszeichenliste

- 1: Reflektorfläche
- 3: erste Gruppe von LED-Elementen
- 5: zweite Gruppe von LED-Elementen
- 7: erster Teilbereich der Reflektorfläche
- 9: Strahlenblenden

## Patentansprüche

1. Scheinwerfer für ein Fahrzeug, aufweisend eine Reflektorfläche (1), und eine erste Gruppe von LED-Elementen (3) und eine zweite Gruppe von LED-Elementen (5), deren jeweilige Abstrahlcharakteristik auf die Reflektorfläche (1) so gerichtet ist, dass die erste Gruppe von LED-Elementen (3) die gesamte Reflektorfläche (1) beleuchtet, um ein Abblendlicht zu erzeugen, und dass die zweite Gruppe von LED-Elementen (5) nur auf einen ersten Teilbereich (7) der Reflektorfläche (1) gerichtet ist, um eine zusätzliche Beleuchtungsfunktion zu erzeugen, wobei jeweilige Strahlenblenden (9) die jeweiligen LED-Elemente so umgeben, dass eine gewünscht definierte Abstrahlcharakteristik auf die Reflektorfläche (1) erreicht wird und unerwünschtes Streulicht absorbiert oder in die gewünschte Abstrahlcharakteristik umgelenkt wird.

2. Scheinwerfer nach Anspruch 1,
wobei alle LED Elemente der ersten Gruppe (3) und der zweiten Gruppe (5) auf einem gemeinsamen Paneel angeordnet sind.

3. Scheinwerfer nach Anspruch 2,
wobei das Paneel innerhalb eines Gehäuses des Scheinwerfers angeordnet ist.

4. Scheinwerfer nach einem der Ansprüche 1 bis 3,
wobei die zusätzliche Beleuchtungsfunktion die Funktion einer Nebelleuchte ist.

5. Scheinwerfer nach einem der Ansprüche 1 bis 3,
wobei die zusätzliche Beleuchtungsfunktion die Funktion eines Fernlichts ist.

6. Scheinwerfer nach einem der vorhergehenden Ansprüche,
weiterhin aufweisend eine dritte Gruppe von LED-Elementen, deren LED-Elemente so ausgerichtet und konfiguriert sind, dass ihre Abstrahlcharakteristik auf die Reflektorfläche (1) gerichtet ist, um ein Nebellicht oder Fernlicht zu erzeugen.

7. Scheinwerfer nach Anspruch 6,
wobei die Abstrahlcharakteristik der dritten Gruppe von LED-Elementen nur auf einen zweiten, vom ersten abweichenden, Teilbereich der Reflektorfläche (1) gerichtet ist.

8. Scheinwerfer nach einem der vorhergehenden Ansprüche,
wobei der Scheinwerfer zwei Reflektorflächen (1), und in jedem der Reflektorflächen (1) einen jeweiligen ersten Teilbereich (7) aufweist.

9. Scheinwerfer nach Anspruch 8,
wobei die zwei Reflektorflächen (1) unterschiedliche Abstrahlcharakteristiken in die Umgebung des Fahrzeugs aufweisen.

10. Fahrzeug mit einem Scheinwerfer nach einem der vorhergehenden Ansprüche.
